# EUROPÄISCHE PATENTSCHRIFT

(11) **EP 1 525 125 B1**
(45) Veröffentlichungstag und Bekanntmachung des Hinweises auf die Patenterteilung: **26.11.2008**
(21) Anmeldenummer: 03766316.8
(22) Anmeldetag: 28.07.2003
(51) Int. Cl.: B60S 1/52, B05B 12/04, B05B 1/30

(54) **STEUERVENTIL, DÜSENANORDNUNG UND WASCHANLAGE**
CONTROL VALVE, NOZZLE ARRANGEMENT, AND WASHING UNIT
SOUPAPE DE COMMANDE, DISPOSITIF DE BUSE ET INSTALLATION DE LAVAGE

(30) Priorität: 31.07.2002 DE 10234872
(43) Veröffentlichungstag der Anmeldung: 27.04.2005
(73) Patentinhaber: Valeo Wischersysteme GmbH, 74321 Bietigheim-Bissingen (DE)
(72) Erfinder: LASEBNICK, Uwe, 71254 Ditzingen (DE); EISELE, Simone, 74379 Ingersheim (DE)
(74) Vertreter: Jahn, Wolf-Diethart
(86) Internationale Anmeldenummer: PCT/EP2003/008292
(87) Internationale Veröffentlichungsnummer: WO 2004/012968

(56) Entgegenhaltungen:
- EP-A- 0 411 431
- EP-A- 0 782 946
- EP-A- 1 024 068
- EP-A- 1 147 956
- US-A- 5 857 624
- US-B1- 6 402 052

## Beschreibung

Die Erfindung betrifft ein Steuerventil zum Zuführen einer Reinigungsflüssigkeit an die Düsenöffnung einer Düse einer Waschanlage für Fahrzeugscheiben, eine Düsenanordnung und eine Waschanlage.

Aus der EP 0 102 306 ist ein Steuerventil zum Zuführen einer Reinigungsflüssigkeit an Düsenöffnungen einer Düse einer Waschanlage für Fahrzeugscheiben bekannt geworden, wobei das Ventil zwei Abflüsse aufweist, die mit den Düsenöffnungen koppelbar sind, wobei das Ventil einen Zufluss aufweist, der mit einer Förderpumpe für die Reinigungsflüssigkeit koppelbar ist, und wobei ein den Weg der Reinigungsflüssigkeit vom Zufluss zu den Abflüssen beeinflussender Ventilkörper vorgesehen ist. Die Steuerung des Ventils erfolgt elektromagnetisch. Dabei hat sich als nachteilig herausgestellt, dass zur Steuerung des Ventils eine Stromversorgung am Ventil vorzusehen ist. Ferner ist die Bereitstellung eines solchen Ventils aufgrund der elektromagnetischen Komponenten aufwändig und teuer.

Der vorliegenden Erfindung liegt deshalb die Aufgabe zugrunde, ein Steuerventil der eingangs genannten Art, eine Düsenanordnung und eine Waschanlage bereitzustellen, die auf einfache Art und Weise ein gezieltes Ansteuern des Ventils ermöglichen. Insbesondere soll dabei auf die Verwendung von elektrischem Strom zur Ansteuerung des Ventils verzichtet werden.

Ein Steuerventil nach dem Oberbegriff des Anspruchs 1 ist aus der EP 0 782 946 A bekannt.

Gelöst wird die genannte Aufgabe durch ein Steuerventil mit denMerkmalen des Anspruchs 1, wobei der Ventilkörper durch den Druck der Reinigungsflüssigkeit in wenigstens zwei Ventilstellungen steuerbar ist.

Dies bringt den Vorteil mit sich, dass am Steuerventil keine Bauteile vorzusehen sind, die von elektrischem Strom gespeist werden. Ferner sind keine Bauteile erforderlich, die über zusätzliche Mittel ein Steuern des Ventilkörpers bewirken. Die Erfindung hat den Vorteil, dass die Steuerung des Ventilkörpers ausschließlich über den Druck der Reinigungsflüssigkeit erfolgt. Je nach Druck der Reinigungsflüssigkeit befindet sich der Ventilkörper in einer vorgesehenen Ventilstellung, die den Weg der Reinigungsflüssigkeit vom Zufluss zu den Abflüssen beeinflusst.

Eine vorteilhafte Ausgestaltung der Erfindung zeichnet sich dadurch aus, dass der Ventilkörper als Schieberelement, insbesondere als Längsschieberelement ausgebildet ist. Längsschieberelemente haben den Vorteil, dass sie zwischen den Ventilstellungen in axialer Richtung verschiebbar gelagert sind. Eine derartige Lagerung lässt sich auf einfache Art und Weise realisieren. Allerdings können anstelle von Längsschieberelementen auch Drehschieberelemente vorgesehen werden, die den Vorteil aufweisen, dass sie zur Steuerung der Reinigungsflüssigkeit um ihre Längsachse drehbar gelagert sind. Dies führt zu einer sehr kompakten Bauform des Steuerventils.

Eine besonders bevorzugte Ausführungsform der Erfindung zeichnet sich dadurch aus, dass das Ventil als Wege-Schieberventil, insbesondere als 3/2 WegeLängsschieberventil oder als 3/3 Wege-Längsschieberventil, ausgebildet ist. Derartige Ventile sehen insgesamt drei Anschlüsse, nämlich einen Zufluss und zwei Abflüsse vor. Je nach Anwendung sind zwei oder drei Ventilstellungen denkbar.

Ein im Aufbau einfaches Steuerventil ergibt sich dann, wenn der Ventilkörper zwischen wenigstens zwei Ventilstellungen hin- und herschaltbar ist. Bei einem Längsschieberelement liegen die Ventilstellungen in axialer Richtung des Ventilkörpers. Ist der Ventilkörper als Drehschieberelement ausgebildet, so sind die Ventilstellungen abhängig vom Drehwinkel des Ventilkörpers. Ein Vorsehen von lediglich zwei Ventilstellungen hat den Vorteil, dass beide Ventilstellungen Ventilendstellungen sind, bei denen die Lage des Ventilkörpers durch Anschläge definiert werden kann.

Ein vorteilhaftes Ventil zeichnet sich dadurch aus, dass der Ventilkörper in einer ersten Ventilstellung, insbesondere in einer Niederdruckstellung, den Zufluss mit dem ersten Abschluss verbindet oder mit dem ersten und dem zweiten Abschluss verbindet. Hierdurch wird erreicht, dass in der ersten Ventilstellung Reinigungsflüssigkeit der Düsenöffnung bzw. den Düsenöffnungen zugeführt wird, die mit dem ersten Abfluss oder mit dem ersten und dem zweiten Abfluss gekoppelt ist bzw. sind.

Vorzugsweise kann erfindungsgemäß vorgesehen sein, dass der Ventilkörper in einer zweiten Ventilstellung, insbesondere einer Hochdruckstellung, den Zufluss von dem ersten Abfluss abtrennt und den Zufluss mit dem zweiten Abfluss verbindet. Dadurch wird die Reinigungsflüssigkeit an diejenige bzw. diejenigen Düsenöffnung bzw. Düsenöffnungen umgeleitet, die mit dem zweiten Abfluss gekoppelt ist bzw. sind.

Ferner ist denkbar, dass eine Grundstellung des Ventilkörpers vorgesehen ist, insbesondere eine Nulldruckstellung, in der der Ventilkörper den Zufluss von beiden Abflüssen abtrennt. In dieser Grund- bzw. Nulldruckstellung ist der Ventilkörper vorteilhafterweise in einer Rückschlagventilstellung. Hierdurch wird ein Auslaufen von Reinigungsflüssigkeit aus den Öffnungen des Düsenkörpers verhindert.

Um eine vorgesehene Position des Ventilkörpers in den verschiedenen Ventilstellungen ermöglichen zu können, kann vorgesehen sein, dass der Ventilkörper in wenigstens einer Ventilstellung von der Federkraft eines Federelements, insbesondere einer Schraubenfeder, beaufschlagt wird.

Hierbei ist vorteilhaft, wenn der Ventilkörper in wenigstens einer Ventilstellung von der Federkraft gegen einen Anschlag beaufschlagt wird. Hierdurch kann eine definierte Position des Ventilkörpers gewährleistet werden.

Ferner ist denkbar, dass der Ventilkörper in wenigstens einer Ventilstellung lediglich gegen die Federkraft des Federelements wirkt, ohne gegen einen Anschlag beaufschlagt zu werden. In diesem Falle befindet sich der Ventilkörper in einer schwimmenden Ventilstellung, in der ein Kräftegleichgewicht zwischen der Federkraft und der aus dem Druck der Reinigungsflüssigkeit resultierenden Kraft vorherrscht.

Vorteilhafterweise ist das Ventil in dem Düsenkörper einer Düse angeordnet. Die das Ventil umfassende Düse kann als einstückiges Bauteil gefertigt, gehandhabt und montiert werden. Weiterer Vorteil dieser Ausbildung ist, dass separate Leitungen zwischen dem Ventil und der Düse, beispielsweise in Form vom Schläuchen, entfallen.

Andererseits ist denkbar, das Ventil zwischen der Förderpumpe und der Düse anzuordnen. Das Ventil kann hierbei als separates Bauteil ausgebildet sein.

Alternativ hierzu ist ebenfalls erfindungsgemäß möglich, dass das Ventil Teil der Förderpumpe ist und innerhalb der Förderpumpe angeordnet ist.

Die eingangs genannte Aufgabe wird ferner durch eine Düsenanordnung mit wenigstens einer Düse und mit einem mit der Düsenöffnung der Düse verbundenen, insbesondere im Düsenkörper der Düse untergebrachten, erfindungsgemäßen Steuerventil gelöst.

Eine solche Düsenanordnung sieht vorteilhafterweise vor, dass die Düse je nach Druck der Reinigungsflüssigkeit, und damit je nach dem über welchen Flüssigkeitskanal die Reinigungsflüssigkeit der jeweiligen Düsenöffnung zugeführt wird, zur Erzeugung von verschiedenartigen Flüssigkeitsstrahlen geeignet ist. Denkbar ist beispielsweise, dass bei Zuführung der Reinigungsflüssigkeit über den einen Flüssigkeitskanal Flüssigkeitsstrahlen in Form von Punktstrahlen erzeugt werden und bei Zuführung der Reinigungsflüssigkeit über den anderen Flüssigkeitskanal ein Flüssigkeitsstrahl in Form eines Flachstrahles erzeugt wird.

Ferner wird die genannte Aufgabe durch eine Waschanlage für Fahrzeugscheiben mit einer erfindungsgemäßen Düsenanordnung und mit einer mit der Düsenanordnung gekoppelten Förderpumpe für die Reinigungsflüssigkeit gelöst.

Dabei ist vorteilhaft, wenn der Zufluss des Ventils über eine Flüssigkeitsleitung mit einer Förderpumpe verbunden ist, die die Reinigungsflüssigkeit gesteuert mit unterschiedlichem Druck liefert. Die Förderpumpe kann hierbei eine in ihrer Drehzahl gesteuerte oder geregelte Pumpe sein. Besonders vorteilhaft ist, wenn die Pumpe bei unterschiedlicher Drehrichtung die Reinigungsflüssigkeit mit unterschiedlichem Druck liefert.

Vorteilhafterweise wird der Druck der Förderpumpe in Abhängigkeit der Fahrzeuggeschwindigkeit gesteuert.

Beispielsweise kann bei einer Fahrzeuggeschwindigkeit unterhalb von 80 km/h ein Niederdruck erzeugt werden, der beispielsweise zwischen 0,2 und 1,4 bar liegt. Erhöht sich die Fahrzeuggeschwindigkeit auf über 80 km/h, so wird der durch die Förderpumpe erzielte Druck der Reinigungsflüssigkeit beispielsweise auf 1,4 oder mehr bar erhöht. Bei geringerer Geschwindigkeit bzw. bei geringerem Druck wird vorteilhafterweise der Ausgang des Ventils geöffnet, der zur Erzeugung eines flachen und/oder flächenartigen Strahles führt. Bei einer Fahrzeuggeschwindigkeit, die größer als 80 km/h beträgt, wird vorteilhafterweise der Zufluss angesteuert, der zur Erzeugung eines Punktstrahles bzw. mehrerer Punktstrahlen führt.

Weitere vorteilhafte Einzelheiten und Ausgestaltungen der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Figur 1: eine erfindungsgemäße Waschanlage in systematischer Darstellung;
- Figur 2: eine nicht beanspruchte Düsenanordnung; und
- Figur 3 - 7: verschiedene Ausführungen von Steuerventilen; und
- Figur 8: eine erfindungsgemäße Düsenanordnung.

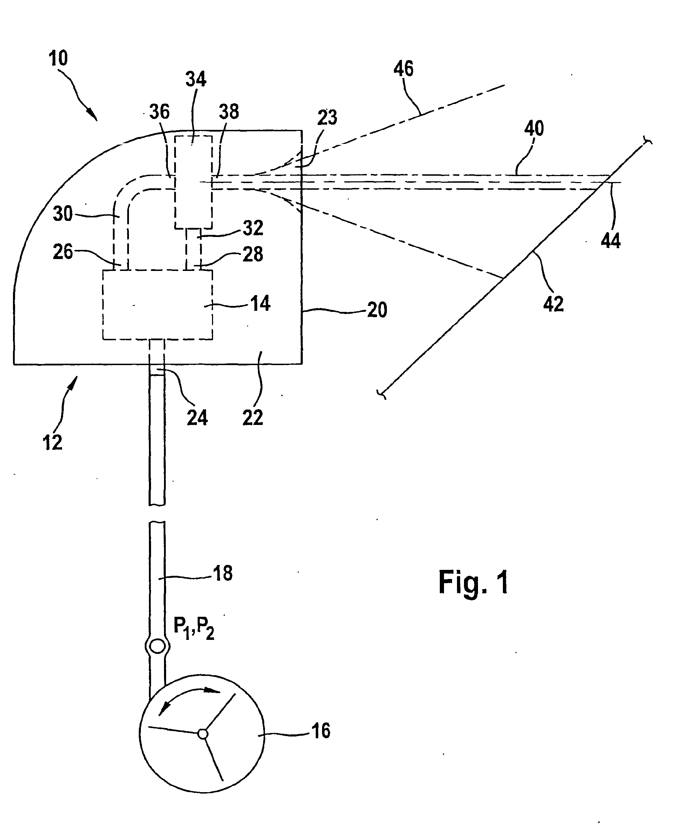

In der Figur 1 ist eine Waschanlage 10 dargestellt, die eine Düsenanordnung 12, ein Steuerventil 14, eine Förderpumpe 16 und eine Leitung 18 zwischen der Förderpumpe 16 und der Düsenanordnung 12 umfasst. Die Düsenanordnung 12 weist eine Düse 20 mit einem Düsenkörper 22 und einer Düsenöffnung 23 auf. Die Düse 20 bzw. das Ventil 14 sieht eine Zuleitung 24 vor, die mit der Leitung 18 lösbar verbindbar ist. Das Steuerventil 14 sieht insgesamt zwei Abflüsse 26, 28 vor, die über Flüssigkeitskanäle 30, 32 mit einer Wirbelkammer 34 verbunden sind. Der Kanal 32 ist so angeordnet, dass ein durch den Kanal 30 fließender Flüssigkeitsstrahl die Wirbelkammer 34 axial durchquert und durch den Ausgangsabschnitt 38, der zwischen der Wirbelkammer 34 und der Düsenöffnung 23 angeordnet ist, verläuft. Ein derartiger Flüssigkeitsstrahl, der mit dem Bezugszeichen 40 bezeichnet ist, trifft als Punktstrahl auf die Scheibe 42 eines nicht dargestellten Fahrzeuges. Die Achse des Punktstrahles 40 ist mit der Bezugszahl 44 versehen.

Tritt die Reinigungsflüssigkeit über den Abfluss 28 in die Wirbelkammer 34, so wird sie dort verwirbelt und über den Ausgangsabschnitt 38 der Düsenöffnung 23 zugeführt. Aufgrund der Verwirbelung tritt die Reinigungsflüssigkeit als Flachoder Kegelstrahl 46 aus der Düsenöffnung 23 aus und trifft großflächig auf die Scheibe 42. Die Geometrie der Strahlform 40, 46 hängt folglich davon ab, über welchen Abfluss 26, 28 bzw. über welchen Kanal 30, 32 die Reinigungsflüssigkeit der Wirbelkammer 34 zugeführt wird. Denkbar ist außerdem, dass beide Abflüsse 26, 28 mit Reinigungsflüssigkeit versorgt werden, so dass eine Mischstrahlform der beiden Strahle 40 und 46 erzeugt wird.

Bei der Förderpumpe 16 kann es sich beispielsweise um eine in ihrer Drehzahl gesteuerte oder geregelte Pumpe handeln. Sie liefert die Reinigungsflüssigkeit mit unterschiedlichen Drucken, nämlich zum einen mit einem Niederdruck P₁ und einem Hochdruck P₂. Der Niederdruck P₁ liegt vorteilhafterweise zwischen 0,2 und 1,4 bar. Der Hochdruck P₂ liegt vorteilhafterweise oberhalb von 1,4 bar. Denkbar ist, dass die Förderpumpe 16 in Abhängigkeit von der Fahrzeuggeschwindigkeit gesteuert ist. Hierbei kann vorgesehen sein, dass bei Fahrzeuggeschwindigkeiten unterhalb von 80 km/h die Pumpe die Reinigungsflüssigkeit mit dem Druck P₁ liefert und bei Fahrzeuggeschwindigkeiten oberhalb von 80 km/h mit Hochdruck P₂.

Über das Steuerventil wird der Weg der von der Förderpumpe 16 kommenden Reinigungsflüssigkeit zu den Abflüssen 26, 28 beeinflusst. Die Ansteuerung des Steuerventils 14 erfolgt hierbei durch den am Zufluss 24 des Ventils 14 anstehenden Druck der Reinigungsflüssigkeit. Das Ventil 14 ist druckgesteuert.

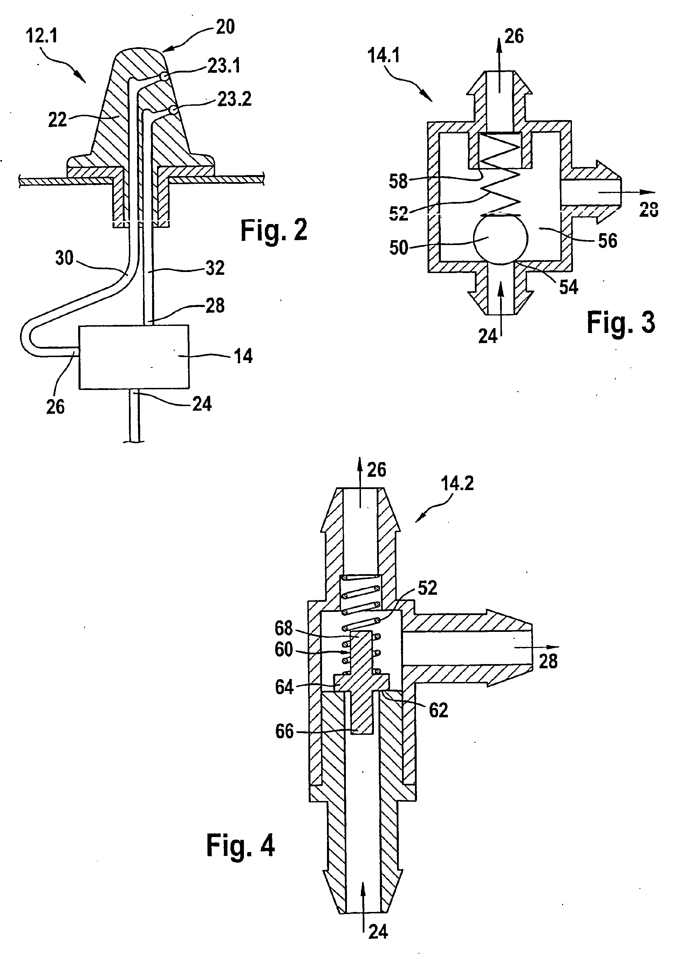

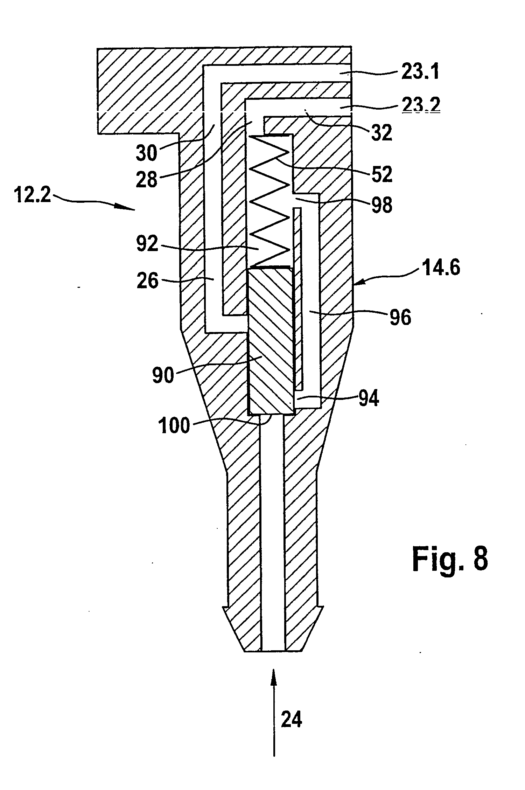

Bei der Düsenanordnung 12 kann es sich um eine Düsenanordnung 12.1 gem. Figur 2 oder 12.2 gem. Figur 8 handeln. Bei dem in der Figur 1 und Figur 2 mit 14 bezeichneten Ventil kann es sich um ein in den Figuren 3 bis 8 gezeigtes Ventil 14.1 bis 14.6 handeln.

In der Figur 2, in der eine etwas andere Düsenanordnung 12.1 dargestellt ist, sind der Figur 1 entsprechende Bauteile mit gleichen Bezugszeichen gekennzeichnet. Der Düsenkörper 22 der Düse 20 sieht gemäß Figur 2 zwei verschiedene Düsenöffnungen 23.1 und 23.2 vor. Die Düsenöffnung 23.1 kann zur Erzeugung eines Punktstrahles vorgesehen sein. Die Düsenöffnung 23.2 kann zur Erzeugung eines Flachstrahles dienen. Je nach Ventilstellung des drucksteuerbaren Steuerventils 14 wird die über den Zufluss 24 zugeführte Reinigungsflüssigkeit entweder dem Abfluss 26 und/oder dem Abfluss 28 zugeordnet.

In den Figuren 3 bis 7 sind verschiedenartig ausgebildete Steuerventile 14.1. bis 14.5 dargestellt, die in einer Waschanlage 10 gemäß Figur 1 bzw. einer Düsenanordnung 12 gemäß Figur 1 oder Figur 2 Verwendung finden können. Die Zuflüsse der Ventile 14.1. bis 14.5 tragen alle das Bezugszeichen 24 und die beiden Abflüsse 26, 28.

In der Figur 3 ist ein 3/2 Wege-Kugelventil dargestellt. Als Ventilköper ist ein Kugelelement 50 vorgesehen, das in seiner neutralen Nulldruckstellung dargestellt ist. Über ein Federelement 52 wird in dieser Nulldruckstellung der Zufluss 24 durch Anliegen des Kugelelements 52 an dem zuflussseitigen Ventilsitz 54 verschlossen.

Wenn der an der Reinigungsflüssigkeit anstehende Druck auf einen Niederdruck P₁ erhöht wird, hebt das Kugelelement 50 von seinem Ventilsitz 54 gegen die Federkraft des Federelements 52 ab. Flüssigkeit kann in den Ventilraum 56 einströmen. Der Niederdruck P₁ und die Federkraft des Federelements 52 sind hierbei so aufeinander abgestimmt, dass das Kugelelement 50 in einem Schwebezustand zwischen dem Ventilsitz 54 am Zufluss 24 und einem zweiten Ventilsitz 58 am Abfluss 26 schwimmt. Dies führt dazu, dass die Reinigungsflüssigkeit zu beiden Abflüssen 26, 28 ausströmen kann.

Wenn der Druck der Reinigungsflüssigkeit auf einen Hochdruck P₂ erhöht wird, wird das Kugelelement 50 gegen den Ventilsitz 28 beaufschlagt. Dadurch wird der Abfluss 26 geschlossen. Die Reinigungsflüssigkeit kann folglich nur noch über den Abfluss 28 aus dem Ventil 14.1 austreten.

Bei Wegnahme des Hochdrucks P₂ bzw. des Niederdrucks P₁ wird aufgrund der Federkraft des Federelements 52 das Ventil 14.1 geschlossen, es wirkt dann als Rückschlagventil.

Das in der Figur 4 dargestellte Ventil 14.2 entspricht im Wesentlichen dem Ventil 14.1 gemäß Figur 3. Anstelle eines Kugelelements als Ventilkörper ist bei dem Ventil 14.2 ein federbeaufschlagter, zylindrischer Schiebestift 60 vorgesehen, der einen in der Nulldruckstellung an einem Ventilsitz 62 dicht anliegenden Ringbund 64 umfasst. Der Schiebestift 60 hat den Vorteil, dass er so ausgelegt ist, dass ein Ausknicken des Schiebestifts 60 entlang der axialen Verschieberichtung nicht möglich ist. Der Schiebestift 60 sieht hierzu auf seiner dem Zufluss 24 zugewandten Seite einen in axialer Richtung relativ lang ausgebildeten Führungsabschnitt 66 vor. Auf der dem Abfluss 26 zugewandten Seite weist der Schiebestift 60 einen Führungsabschnitt 68 auf, der in dem Federelement 52 gefangen ist. Aufgrund der sich in axialer Richtung erstreckenden Führungsabschnitte 66, 68 ist ein Ausknicken des Schiebestifts 60 bei axialem Verschieben nicht möglich. Das Ventil 14.2 gemäß Figur 4 sieht entsprechend dem Ventil 14.1 gemäß Figur 3 insgesamt drei Ventilstellungen vor, nämlich zum einen die dargestellte Nulldruckstellung, eine Niederdruckstellung, bei der beide Abflüsse 26, 28 geöffnet sind und eine Hochdruckstellung, bei der lediglich der Abfluss 28 geöffnet ist.

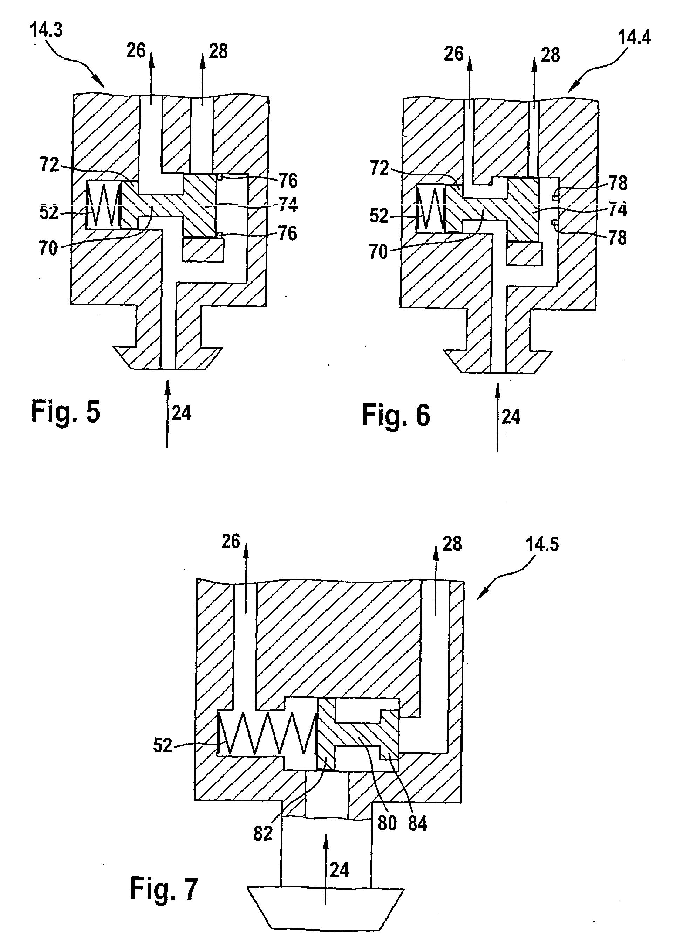

Bei dem in der Figur 5 dargestellten Ventil 14.3 handelt es sich um ein 3/2 Längsschieberventil. Dieses Ventil sieht keine Rückschlagventilstellung vor, bei dem der Zufluss 24 von den Abflüssen 26, 28 vollständig abgetrennt ist. Entweder ist der Zufluss 24 mit dem Abfluss 26 oder der Zufluss 24 mit dem Abfluss 28 verbunden. Dazu ist der Ventilkörper 70 als Kolbenschieberelement mit zwei unterschiedlich großen Kolbenabschnitten 72 und 70 ausgebildet. In der dargestellten Grundstellung wird der Kolbenabschnitt 74 gegen Anschlagmittel 76 über ein Federelement 52 beaufschlagt. Der Durchmesser der Kolbenabschnitte 72 und 74 und die Federkraft des Federelements 52 sind jeweils so ausgelegt, dass bei Erreichen eines Schwelldruckes bzw. dass bei Flüssigkeitshochdruck das Kolbenschieberelement 70 axial nach links gegen die Federkraft des Federelements 52 verschoben wird. Dabei wird die Verbindung des Zuflusses 24 mit dem Abfluss 26 getrennt und der Zufluss 24 mit dem Abfluss 28 verbunden. Bei Senken des Druckes auf den Niederdruck P₁ wird aufgrund der Federkraft des Federelements 52 das Kolbenschieberelement 70 in die in der Figur 5 dargestellte Grundposition rückgeführt. Der Abfluss 28 ist dann verschlossen und der Abfluss 26 geöffnet.

Das in der Figur 6 dargestellte Ventil 14.4 ist eine Weiterbildung des Ventils 14.3. Zusätzlich ist eine dritte Schaltstellung des Kolbenschieberelements 70 vorgesehen, in der beide Abflüsse 26 und 28 verschlossen sind. Bei Wegnahme des Drucks der Reinigungsflüssigkeit wird aufgrund der Federkraft des Federelements 52 das Kolbenschieberelement nach rechts gegen Anschlagzapfen 78 geschoben. In dieser, in der in Figur 6 nicht dargestellten Stellung, ist der Abfluss 26 durch den Kolbenabschnitt 72 und der Abfluss 28 durch den Kolbenabschnitt 74 verschlossen. Bei Druckbeaufschlagen der Reinigungsflüssigkeit mit dem Niederdruck P₁ bewegt sich das Kolbenschieberelement 70 in die in der Figur 6 dargestellte Stellung. Hierbei herrscht ein Kräftegleichgewicht zwischen der das Kolbenschieberelement 70 nach rechts beaufschlagenden Federkraft und der das Kolbenschieberelement 70 nach links beaufschlagenden Kraft, die aus der an den Kolbenabschnitten 70, 74 unter Niederdruck P₁ anliegenden Reinigungsflüssigkeit resultiert. In dieser Stellung ist der Abfluss 28 durch den Kolbenabschnitt 74 von dem Zufluss 24 getrennt. Wird der Druck der Reinigungsflüssigkeit auf Hochdruck P₂ erhöht, so bewegt sich das Kolbenschieberelement 70 gegen die Federkraft weiter nach links, so dass der Abfluss 26 von dem Zufluss 24 getrennt wird. Bei dem in der Figur 6 dargestellten Ventil handelt es sich folglich um ein 3/3 Wege-Längsschieberventil.

In der Figur 7 ist ein weiteres Ventil 14.5 dargestellt, dass als 3/2 Wege-Längsschieberventil ausgebildet ist. Das Kolbenschieberelement 80 sieht entsprechend den Ausführungsformen gemäß Figur 5 und 6 zwei Kolbenabschnitte 82 und 84 vor, die einen unterschiedlichen Durchmesser aufweisen. Bei Anlegen eines Niederdrucks P₁ strömt die Reinigungsflüssigkeit über den Zufluss 24 lediglich zu dem Abfluss 26. Wird der Druck auf einen Hochdruck P₂ erhöht, so bewegt sich das Kolbenschieberelement 80 entgegen der Federkraft der Feder 52 nach links, der Abfluss 26 wird vom Zufluss 24 getrennt; der Abfluss 28 wird mit dem Zufluss 24 verbunden.

Die in den Figuren 3 bis 7 dargestellten Ventile 14.1. bis 14.5 haben den Vorteil, dass lediglich ein zwischen zwei oder drei Schaltstellungen druckgesteuerter Ventilkörper 50, 60, 70, 80 vorgesehen ist. Zur Steuerung der Ventilkörper sind keine Fremdmittel erforderlich. Die Ventile können derart klein ausgebildet sein, dass sie entsprechend der Ausführungsform gemäß Figur 1 innerhalb eines Düsenkörpers einer Düse untergebracht werden können.

Eine solche Ausführungsform einer erfindungsgemäßen Düsenanordnung 12.2 ist in der Figur 8 dargestellt. Ein zylindrischer Ventilkörper 90 eines Ventils 14.6 ist hierbei in einer Zylinderaussparung 92 zwischen insgesamt drei Schaltstellungen axial gegen die Federkraft des Federelements 52 verschiebbar. In der gezeigten Grundstellung sind beide Abflüsse 26, 28 von dem Zufluss 24 getrennt. Bei Anlegen des Niederdrucks P₁ an die Reinigungsflüssigkeit am Zufluss 24 bewegt sich der Ventilkörper 90 gegen die Federkraft der Feder 52 so weit, dass der Eingang 94 eines Bypasses 96 geöffnet wird. Der Abfluss 26 bleibt von dem Ventilkörper 90 verschlossen. Der Bypass 96 mündet über seinen Ausgang 98 in den dem Abfluss 28 zugewandten Bereich der Zylinderaussparung 92. Die Federkraft des Federelements 52 ist hierbei so ausgelegt, dass bei Anlegen des Niederdrucks P₁ ein Kräftegleichgewicht zwischen der Federkraft und der aus der die Stirnseite 100 des Ventilkörpers 90 mit Niederdruck P₁ beaufschlagenden Reinigungsflüssigkeit resultierenden Kraft herrscht.

Bei Erhöhung des Druckes der Reinigungsflüssigkeit auf den Hochdruck P₂ wird der Ventilkörper 90 gegen die Federkraft weiter verschoben, wodurch zum einen der Abfluss 26 mit dem Zufluss 24 verbunden und zum anderen der Ausgang 98 von dem Abfluss 28 getrennt wird. Folglich strömt dann Reinigungsflüssigkeit über den Zufluss 24 und den Abfluss 26 bzw. des Kanals 30 zu der Düsenöffnung 23.1.

Das in die Düsenanordnung 12.2 integrierte Ventil 14.6 hat den Vorteil, dass es mit einem Kolbenschieberelement 90 auskommt, das zylindrisch ist und folglich keinen verschiedenen Kolbenabschnitte vorsieht. Die Fertigung und Montage eines derartigen Ventils 14.6 ist auf einfache Art und Weise realisierbar.

Die Zylinderaussparung 92 sieht insgesamt fünf Anschlüsse vor, nämlich den Zufluss 24, den dem Zufluss 24 nahe gelegenen Eingang 94 des Bypasses 96, den Abfluss 26, den dem Abfluss 28 nahe gelegenen Ausgang 98 des Bypasses 96 und den Abfluss 28. Je nach axialer Lage des Ventilkörpers 90 kann Reinigungsflüssigkeit über den Zufluss 24 zu den Abflüssen 26, 28 strömen. Der axiale Abstand des Einganges 94 und des Ausganges 98 des Bypasses 96 ist dabei so bemessen, dass er etwas größer ist als die axiale Längsausdehnung des Ventilkörpers 90. Dadurch wird gewährleistet, dass ein Umströmen des Ventilkörpers 90 über den Bypass 96 möglich ist. Außerdem ist der axiale Abstand des Abflusses 26 und des Ausganges 98 so bemessen, dass er geringfügig kleiner ist als die axiale Längsausdehnung des Ventilkörpers 90. Hierdurch wird gewährleistet, dass der Ausgang 98 verschlossen ist, bevor der Abfluss 26 geöffnet wird. Dadurch kann gewährleistet werden, dass ein Druckabfall durch zeitgleiches Offensein des Abflusses 26 und des Ausgangs 98 bzw. des Abflusses 28 nicht eintreten kann.

Die in der Figur 8 dargestellte Düsenanordnung 12.2 hat außerdem den Vorteil, dass der Ventilkörper 90 axial zum Zufluss 24 angeordnet ist. Dadurch baute die Düsenanordnung 12.3 sehr kompakt. Dabei ist der Zufluss 24 an der einen Stirnseite der Zylinderaussparung 92 angeordnet und der Abfluss 28 an der gegenüberliegenden Stirnseite. Auch dies trägt zu einem kompakten Bauen der Düsenanordnung 12.3 bei.

Entgegen einer Anordnung nach Figur 8 ist es erfindungsgemäß denkbar, dass die verschiedenartigen Ventile 14 als eigene Baugruppe zwischen den jeweiligen Düsen 20 und der Förderpumpe 16 vorhanden sind, wie beispielsweise in der Figur 2 dargestellt.

## Patentansprüche

1. Steuerventil zum Zuführen einer Reinigungsflüssigkeit an wenigstens eine Düsenöffnung (23, 23.1, 23.2) einer Düse (20) einer Waschanlage (10) für Fahrzeugscheiben, wobei das Ventil (14) weinigstens zwei Abflüsse (26, 28) aufweist, die mit der Düsenöffnung (23) bzw. den Düsenöffnungen (23.1, 23.2) gekoppelt oder koppelbar sind; wobei das Ventil (14) einen Zufluss (24) aufweist, der mit einer Förderpumpe (16) für die Reinigungsflüssigkeit gekoppelt oder koppelbar ist, und wobei ein den Weg der Reinigungsflüssigkeit vom Zufluss zu den Abflüssen beeinflussender Ventilkörper (90) vorgesehen ist, der durch den Druck (P₀, P₁, P₂) der Reinigungsflüssigkeit in wenigstens zwei Ventilstellungen steuerbarer ist, **dadurch gekennzeichnet, dass** ein den Ventilkörper (90) in einer Ventilstellung (P₁) umgehender Bypass (96) vorgesehen ist, der den Zufluss (24) mit einem Abfluss (28) verbindet, wobei der Eingang (94) oder der Ausgang (98) des Bypasses (96) in wenigstens einer anderen Ventilstellung (P₀, P₂) geschlossen ist, dass in der ersten Ventilstellung (P₁) der Eingang (94) und der Ausgang (98) des Bypasses (96) - und damit auch der eine Abfluss (28) - geöffnet sind, und der andere Abfluss (26) verschlossen ist, und dass in einer zweiten Ventilstellung (P₂) der Eingang (94) des Bypasses (96) geöffnet, der Ausgang (98) des Bypasses (96) geschlossen - und damit der eine Abfluss (28) geschlossen sind, und der andere Abfluss (26) geöffnet ist.

2. Steuerventil nach Anspruch 1, **dadurch gekennzeichnet, dass** der Ventilkörper (90) als Schieberelement, insbesondere als Längs- oder Drehschieberelement, ausgebildet ist.

3. Steuerventil nach einem der vorhergehenden Ansprüche, **dadurch gekennzeichnet, dass** das Ventil als Wege-Schieberventil, insbesondere als 3/2 Wege-Längsschieberventil oder als 3/3 Wege-. Längsschieberventil, ausgebildet ist.

4. Steuerventil nach einem der vorhergehenden Ansprüche, **dadurch gekennzeichnet, dass** der Ventilkörper (90) zwischen wenigstens zwei Ventilstellungen hin- und herschaltbar ist.

5. Steuerventil nach einem der vorhergehenden Ansprüche, **dadurch gekennzeichnet, dass** der Ventilkörper (90) in einer ersten Ventilstellung, insbesondere in einer Niederdruckstellung, den Zufluss (24) mit dem ersten Abfluss (26, 28) oder mit dem ersten Abfluss (26, 28) und dem zweiten Abfluss (28, 26) verbindet.

6. Steuerventil nach einem der vorhergehenden Ansprüche, **dadurch gekennzeichnet, dass** der Ventilkörper (90) in einer zweiten Ventilstellung, insbesondere einer Hochdruckstellung, den Zufluss (24) von dem ersten Abfluss (28, 26) abtrennt und den Zufluss (24) mit dem zweiten Abfluss (26, 28) verbindet.

7. Steuerventil nach einem der vorhergehenden Ansprüche, **dadurch gekennzeichnet, dass** der Ventilkörper (90) in einer Grundstellung, insbesondere in einer Nulldruckstellung, den Zufluss (24) von beiden Abflüssen (26, 28) abtrennt.

8. Steuerventil nach einem der vorhergehenden Ansprüche, **dadurch gekennzeichnet, dass** der Ventilkörper (90) in wenigstens einer Ventilstellung von der Federkraft eines Federelements (52), insbesondere einer Schraubenfeder, beaufschlagt wird.

9. Steuerventil nach Anspruch 8, **dadurch gekennzeichnet, dass** der Ventilkörper (90) in wenigstens einer Ventilstellung von der Federkraft gegen einen Anschlag beaufschlagt wird.

10. Steuerventil nach einem der vorhergehenden Ansprüche, **dadurch gekennzeichnet, dass** der Ventilkörper (90) in wenigstens einer Ventilstellung lediglich gegen die Federkraft des Federelements (52) wirkt, ohne gegen einen Anschlag beaufschlagt zu werden.

11. Steuerventil nach einem der vorhergehenden Ansprüche, **dadurch gekennzeichnet, dass** das Ventil (14) in dem Düsenkörper (22) einer Düse (20) angeordnet ist.

12. Steuerventil nach einem der Ansprüche 1. bis 10, **dadurch gekennzeichnet, dass** das Ventil zwischen der Förderpumpe (16) und der Düse (20) angeordnet ist.

13. Steuerventil (14) nach einem der Ansprüche 1 bis 10, **dadurch gekennzeichnet, dass** das Ventil in der Förderpumpe (16) angeordnet ist.

14. Düsenanordnung mit wenigstens einer Düse (20) und mit einem mit der Düsenöffnung (23) der Düse (20) verbundenen, insbesondere im Düsenkörper (22) der Düse (20) untergebrachten, Ventil (14) nach einem der vorhergehenden Ansprüche.

15. Düsenanordnung nach Anspruch 14, **dadurch gekennzeichet, dass** die.Düse (20) je nach Druck (P₀₁, P₁, P₂) der Reinigungsflüssigkeit, und damit je nachdem über welchen Flüssigkeitskanal (30, 32) die Reinigungsflüssigkeit der jeweiligen Düsenöffnung (23) zugeführt wird, zur Erzeugung von verschiedenartigen Flüssigkeitsstrahlen (40, 46) geeignet ist.

16. Waschanlage für Fahrzeugscheiben (42), mit einer Düsenanordnung (12) nach einem der Ansprüche 14 oder 15 und mit einer mit der Düsenanordnung (12) gekoppelten Förderpumpe (16) für die Reinigungsflüssigkeit.

17. Waschanlage nach Anspruch 16, **dadurch gekennzeichnet, dass** der Zufluss des Ventils (14) über eine Flüssigkeitsleitung (18) mit einer Förderpumpe (16) verbunden ist, die die Reinigungsflüssigkeit gesteuert mit unterschiedlichem Druck (P₁, P₂) liefert.

18. Waschanlage nach Anspruch nach Anspruch 16 oder 17, **dadurch gekennzeichnet, dass** der Druck der Förderpumpe in Abhängigkeit der Fahrzeuggeschwindigkeit gesteuert wird.

## Claims

1. Control valve for supplying a cleaning fluid to at least one nozzle opening (23, 23.1, 23.2) of a nozzle (20) of a washing module (10) for vehicle windscreens, with the valve (14) having at least two drains (26, 28), which are connected to or capable of being connected to the nozzle opening (23) and the nozzle openings (23.1, 23.2), with the valve (14) having an inflow (24) which is connected to or capable of being connected to a feed pump (16) for the cleaning fluid and with a valve body (90) influencing the route of the cleaning fluid from the inflow to the drains being provided, which is controllable in at least two valve positions by the pressure (P₀, P₁, P₂) of the cleaning fluid, **characterised in that** a bypass (96) circumventing the valve body (90) in a valve position (P₁) is provided that connects the inflow (24) to a drain (28), with the inlet (94) or outlet (98) of the bypass (96) being closed in at least one other valve position (P₀, P₂), that in the first valve position (P₁) the inlet (94) and the outlet (98) of the bypass (96) - and therefore also one drain (28) - are open and the other drain (26) is closed and that in a second valve position (P₂), the inlet (94) of the bypass (96) is open, the outlet (98) of the bypass (96) is closed - and therefore one drain (28) is closed and the other drain (26) is open.

2. Control valve according to claim 1, **characterised in that** the valve body (90) is designed as a slide element, particularly as a longitudinal or rotary slide element.

3. Control valve according to one of the above claims, **characterised in that** the valve is designed as a way slide valve, particularly as a 3/2-way longitudinal slide valve, or as a 3/3-way longitudinal slide valve.

4. Control valve according to one of the above claims, **characterised in that** the valve body (90) can be switch back and forth between at least two valve positions.

5. Control valve according to one of the above claims, **characterised in that** the valve body (90) in a first valve position, particularly in a low pressure position, connects the inflow (24) to the first drain (26, 28) or to the first drain (26, 28) and the second drain (28, 26).

6. Control valve according to one of the above claims, **characterised in that** the valve body (90) in a second valve position, particularly a high pressure position, separates the inflow (24) from the first drain (28, 26) and connects the inflow (24) to the second drain (26, 28).

7. Control valve according to one of the above claims, **characterised in that** the valve body (90) in an initial position, particularly in a low pressure position, separates the inflow (24) from both drains (26, 28).

8. Control valve according to one of the above claims, **characterised in that** the valve body (90) in at least one valve position is charged by the spring force of a spring element (52), particularly a helical spring.

9. Control valve according to claim 8, **characterised in that** the valve body (90) in at least one valve position is charged by the spring force against a stop.

10. Control valve according to one of the above claims, **characterised in that** the valve body (90) in at least one valve position solely acts against the spring force of the spring element (52), without being charged against a stop.

11. Control valve according to one of the above claims, **characterised in that** the valve (14) is arranged in the nozzle body (22) of a nozzle (20).

12. Control valve according to claims 1 to 10, **characterised in that** the valve is arranged between the feed pump (16) and the nozzle (20).

13. Control valve (14) according to one of claims 1 to 10, **characterised in that** the valve is arranged in the feed pump (16).

14. Nozzle arrangement with at least one nozzle (20) and with a valve (14) according to one of the above claims connected to the nozzle opening (23) of the nozzle (20), particularly housed in the nozzle body (22) of the nozzle (20).

15. Nozzle arrangement according to claim 14, **characterised in that** the nozzle (20) is suitable for generating different types of fluid jets (40, 46) depending on the pressure (P₀₁, P₁, P₂) of the cleaning fluid and therefore depending on via which fluid duct (30, 32) the cleaning fluid is supplied to the respective nozzle opening (23).

16. Washing module for vehicle windscreens (42) with a nozzle arrangement (12) according to claims 14 or 15 and with a feed pump (16) connected to the nozzle arrangement (12) for the cleaning fluid.

17. Washing module according to claim 16, **characterised in that** the inflow of the valve (14) is connected by means of a fluid line (18) to a feed pump (16) which supplies the cleaning fluid controlled at different pressures (P₁, P₂).

18. Washing module according to claim 16 or 17, **characterised in that** the feed pump pressure is controlled depending on the vehicle speed.

## Revendications

1. Soupape de commande permettant d'amener un liquide de nettoyage à au moins un orifice de buse (23, 23.1, 23.2) d'une buse (20) d'un système de lavage (10) de pare-brises de véhicules, moyennant quoi la soupape (14) présente au moins deux écoulements de sortie (26, 28) qui sont raccordés ou peuvent être raccordés à l'orifice de buse (23) et/ou aux orifices de buse (23.1, 23.2), moyennant quoi la soupape (14) présente un écoulement d'entrée (24) qui est raccordé ou peut être raccordé à une pompe d'alimentation (16) en liquide de nettoyage, et moyennant quoi est prévu un corps de soupape (90) agissant sur la trajectoire du liquide de nettoyage de l'écoulement d'entrée vers l'écoulement de sortie et qui peut être commandé par la pression (P₀, P₁, P₂) du liquide de nettoyage en au moins deux positions de la soupape, **caractérisée en ce qu'**est prévue une dérivation (96) évitant le corps de soupape (90) dans une position (P₁) de la soupape et qui relie l'écoulement d'entrée (24) à un écoulement de sortie (28), l'entrée (94) ou la sortie (98) de la dérivation (96) étant fermée dans au moins une autre positon (P₀, P₂) de la soupape, **en ce que** dans la première position (P₁) de la soupape, l'entrée (94) et la sortie (98) de la dérivation (96) - et donc également un des écoulements de sortie (28) - sont ouverts, et l'autre écoulement de sortie (26) est fermé, et **en ce que** dans une deuxième position (P₂) de la soupape, l'entrée (94) de la dérivation (96) est ouverte, la sortie (98) de la dérivation (96) est fermée - et un des écoulements de sortie (28) est donc fermé, et l'autre écoulement de sortie (26) est ouvert.

2. Soupape de commande selon la revendication 1, **caractérisée en ce que** le corps de soupape (90) est réalisé sous la forme d'un élément à tiroir, en particulier un élément à tiroir longitudinal ou rotatif

3. Soupape de commande selon une des revendications précédentes, **caractérisée en ce que** la soupape est réalisée sous la forme d'une soupape à tiroir à plusieurs voies, en particulier sous la forme d'une soupape à tiroir 3/2 voies longitudinale ou sous la forme d'une soupape à tiroir 3/3 voies longitudinale.

4. Soupape de commande selon une des revendications précédente, **caractérisée en ce que** le corps de soupape (90) peut être basculé entre au moins deux positions de la soupape.

5. Soupape de commande selon une des revendications précédentes, **caractérisée en ce que** dans une première position de la soupape, en particulier dans une position de basse pression, le corps de soupape (90) relie l'écoulement d'entrée (24) au premier écoulement de sortie (26, 28) ou au premier écoulement de sortie (26, 28) et au deuxième écoulement de sortie (28, 26).

6. Soupape de commande selon une des revendications précédentes, **caractérisée en ce que** dans une deuxième position de la soupape, en particulier dans une position de haute pression, le corps de soupape (90) sépare l'écoulement d'entrée (24) du premier écoulement de sortie (28, 26) et relie l'écoulement d'entrée (24) su deuxième écoulement de sortie (26, 28).

7. Soupape de commande selon une des revendications précédentes, **caractérisée en ce que** dans une position de base, en particulier une position de pression nulle, le corps de soupape (90) sépare l'écoulement d'entrée (24) des deux écoulements de sortie (26, 28).

8. Soupape de commande selon une des revendications précédentes, **caractérisée en ce que** dans au moins une position de la soupape, le corps de soupape (90) est contraint par la force de ressort d'un élément de ressort (52), en particulier un ressort hélicoïdal.

9. Soupape de commande selon la revendications 8, **caractérisée en ce que** dans au moins une position de la soupape, le corps de soupape (90) est contraint par la force de ressort contre une butée.

10. Soupape de commande selon une des revendications précédentes, **caractérisée en ce que** dans au moins une position de la soupape, le corps de soupape (90) agit simplement contre la force de ressort de l'élément de ressort (52), sans être contraint contre une butée.

11. Soupape de commande selon une des revendications précédentes, **caractérisée en ce que** la soupape (14) est disposée dans un corps de buse (22) d'une buse (20)

12. Soupape de commande selon une des revendications 1 à 10, **caractérisée en ce que** la soupape est disposée entre la pompe d'alimentation (16) et la buse (20).

13. Soupape de commande selon une des revendications 1 à 10, **caractérisée en ce que** la soupape est disposée dans la pompe d'alimentation (16).

14. Dispositif de buse comportant au moins une buse (20) et comportant une soupape (14) selon une des revendications précédentes reliée à l'orifice de buse (23) de la buse (20) et en particulier logée dans le corps de buse (22) de la buse (20).

15. Dispositif de buse selon la revendication 14, **caractérisé en ce que** la buse (20), en fonction de la pression (P₀, P₁, P₂) du liquide de nettoyage, et donc en fonction de la conduite de liquide (30, 32) par laquelle le liquide nettoyage est amené à l'ouverture de buse (23) concernée, convient pour la production de différents types de jets de liquide.

16. Système de lavage de vitres (42) de véhicules comportant un dispositif de buse selon une des revendications 14 ou 15 et comportant une pompe d'alimentation (16) du liquide de nettoyage couplée au dispositif de buse.

17. Système de lavage selon la revendication 16, **caractérisé en ce que** l'écoulement d'entrée de la soupape (14) est relié par une canalisation de liquide (18) à une pompe d'alimentation (16) qui fournit le liquide de nettoyage de manière contrôlée à une pression variable (P₁, P₂).

18. Système de lavage selon la revendication 16 ou 17, **caractérisé en ce que** la pression de la pompe d'alimentation est contrôlée en fonction de la vitesse du véhicule.
